# EUROPEAN PATENT APPLICATION

(11) **EP 1 800 996 A1**
(43) Date of publication of application: **27.06.2007**
(21) Application number: 06256424.0
(22) Date of filing: 18.12.2006
(51) Int. Cl.: B62D 7/18

(54) **Heavy duty steer axle with live spindles**

(30) Priority: 20.12.2005 US 312306
(71) Applicant: DANA CORPORATION, Toledo, OH 43615 (US)
(72) Inventor: Moreau, Jeffrey, Lawton, MI 49065 (US); Moses, Dave, Kalamazoo, MI 49009 (US)
(74) Representative: Cheyne, John Robert Alexander M.

(57) **Abstract**

A heavy duty steer axle assembly with a live spindle is provided. The assembly includes an axle beam extending transversely across the vehicle, a kingpin disposed within a kingpin bore in the axle beam, a knuckle mounted on the kingpin and rotatable relative to the axle beam, and a spindle hub configured to mount a wheel of the vehicle. A bearing assembly is disposed between the knuckle and spindle hub to allow rotation of the spindle hub. The assembly enables use of a cast, rather than forged, knuckle, allows for removal and service of the vehicle's brake rotor without removal or readjustment of the vehicle's wheel bearings, and allows for an external wheel flange that can be easily replaced with flanges of varying offset, without requiring a new wheel hub assembly.

## Description

### BACKGROUND OF THE INVENTION

### 1. Field of the Invention

This invention relates to steer axle assemblies and, in particular, to a heavy duty steer axle assembly with a kingpin and live spindle.

### 2: Discussion of Related Art

Forged beam axles are used on a variety of vehicles, including large vehicles such as light trucks and commercial trucks. These axles endure high loads which are transmitted to the axle through the wheel. In a conventional steer axle assembly, a steering knuckle supports the wheel and connects the wheel to the axle beam. The steering knuckle is attached to the axle beam with a kingpin. The kingpin is disposed in a bore on the end of the axle beam and may be kept stationary relative to the axle beam while the steering knuckle rotates about the kingpin in response to action of the steering linkage. A non-rotatable spindle that is integral to the steering knuckle, termed a "dead" spindle, extends outward from the steering knuckle. A wheel hub, including a wheel mounting flange, is supported for rotation on the spindle by a bearing assembly. A wheel and tire assembly may then be attached to the wheel mounting flange.

In conventional steer axle assemblies for heavy vehicles a forged knuckle is required in connection with the spindle because the dead spindle must withstand high bending loads. Forged knuckles are difficult and expensive to manufacture. Furthermore, conventional steer axle assemblies require removal of the wheel hub and wheel bearings in order to remove and service a brake rotor. Further, in order to enable wheel flanges with varying offsets to be used, a unique wheel assembly for each offset is required.

The inventors herein have recognized a need for a steer axle assembly that will minimize and/or eliminate one or more of the above-identified deficiencies.

### SUMMARY OF THE INVENTION

The present invention provides a steer axle assembly for a vehicle with a live spindle.

A steer axle assembly in accordance with the present invention includes an axle beam extending transversely across the vehicle. The axle beam has a kingpin bore at a first end. The steer axle assembly further includes a kingpin disposed in the kingpin bore, a knuckle mounted on the kingpin and rotatable relative to the axle beam, and a spindle hub configured to mount a wheel of the vehicle. A bearing assembly is disposed between the knuckle and the spindle hub.

A steer axle assembly in accordance with the present invention is a significant improvement over conventional steer axle assemblies for heavy duty vehicles. The use of a live spindle on a heavy duty vehicle enables the use of a cast knuckle, rather than forged knuckle. A cast knuckle is easier and less expensive to manufacture than a forged knuckle. Use of a cast knuckle is enabled because the bending loads of the vehicle are not reacted by a dead spindle, but by the bearing bore of the knuckle and the fastening bolts located further out radially from the' wheel centerline. Further, the use of a live spindle allows for removal and service of the brake rotor without removal or readjustment of the wheel bearings. Further, the use of a live spindle allows for an external wheel flange that can be easily replaced with other flanges of varying offset, without requiring a new wheel hub assembly to accommodate the varying offsets.

These and other advantages of this invention will become apparent to one skilled in the art from the following detailed description and the accompanying drawings illustrating features of this invention by way of example.

### BRIEF DESCRIPTION OF THE DRAWINGS

Figure 1 is a cross-sectional view of a steer axle assembly in accordance with the present invention.

Figure 2 is a perspective of one component of the steer axle assembly of Figure 1.

Figure 3 is a partial cross-sectional view of a steer axle assembly in accordance with another embodiment of the present invention

Figure 4 is a perspective view of several components of the steer axle assembly of Figure 1.

### DETAILED DESCRIPTION OF EMBODIMENTS OF THE INVENTION

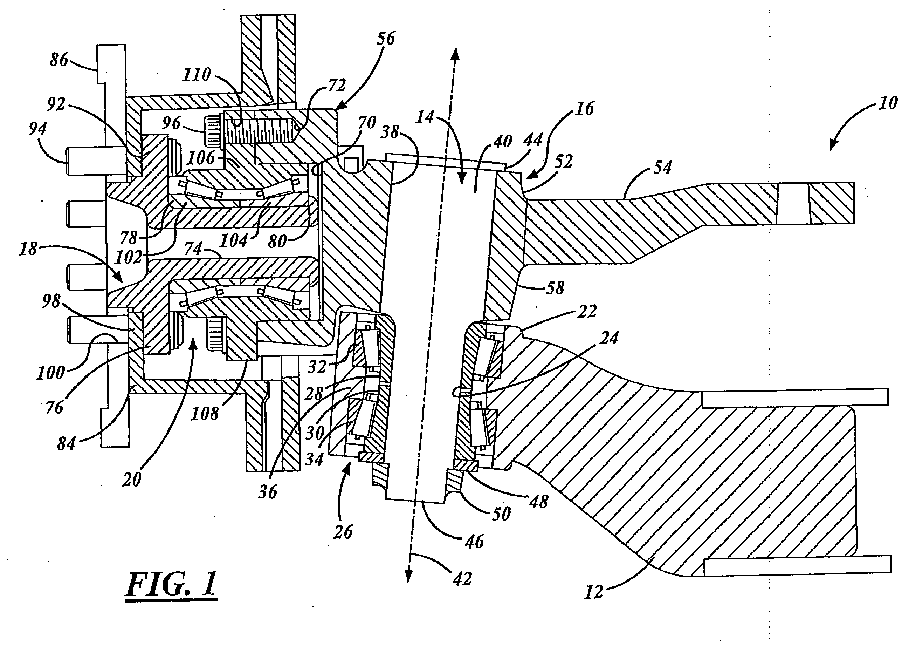

Referring now to the drawings wherein like reference numerals are used to identify identical components in the various views, Figure 1 illustrates a steer axle assembly 10 in accordance with the present invention. Assembly 10 is particularly adapted for use in heavy trucks. In accordance with the present invention, assembly 10 includes an axle beam 12, a kingpin 14, a knuckle 16, a spindle hub 18, and a bearing assembly 20.

Axle beam 12 is provided to support a vehicle (not shown) on wheels (not shown) disposed proximate either end of beam 12. Beam 12 extends transversely across the vehicle. Beam 12 may be made be from steel and may be forged or fabricated. Axle beam 12 may be a conventional forged I-beam or a tubular beam, for example, and may be straight of may define a gooseneck at either end. Each end (only one of which is shown in Figure 1) of beam 12 defines a first boss 22. Boss 22 includes a kingpin bore 24 extending generally vertically and substantially perpendicular to the longitudinal axis of beam 12. Bore 24 is configured to receive kingpin 14 and a set of bearings 26. Bearings 26 are provided to allow relative rotation between kingpin 14 and beam 12. Bearings 26 may take on a variety of forms as described in commonly assigned U.S. Patent No. 6,499,752, the entire disclosure of which is incorporated herein by reference. In the illustrated embodiment, bearings 26 include first and second bearing cones 28, 30 with bearing cones 28, 30 adjacent to each other. Cones 28, 30 form inner bearing races and provide a bearing surface for kingpin 14. Bearings 26 may further include bearing cups 32, 34 disposed radially outwardly of cones 28, 30, respectively, and forming a pair of corresponding outer bearing races. Cups 32, 34 are sized so as to be received within bore 24 of beam 12 and may be supported against shoulders formed by an annular ridge 36 formed in bore 24.

Kingpin 14 is provided to couple knuckle 16 to beam 12. Kingpin 14 may be made from steel or other conventional metals or metal alloys. Kingpin 14 is disposed within kingpin bore 24 at one end of axle beam 12. Kingpin 14 has a first portion rotatably supported by bearings 26 within bore 24 of beam 12 and a second portion fixedly coupled within a bore 38 of knuckle 16. Alternatively, kingpin 14 may be fixedly coupled within bore 24 of beam 12 and knuckle 16 may be rotatably supported on kingpin 14. Kingpin 14 may be fixedly coupled within bore 38 of knuckle 16 in a conventional manner through the use of one or more drawkeys. Kingpin 14 has a longitudinal body 40 disposed about an axis 42. A first axial end of kingpin 14 defines an end flange 44 that extends radially outwardly from body 40 and is disposed against knuckle 16. A second axial end of kingpin 14 defines a partially threaded shank 46 that extends outwardly from bore 24 of beam 12. A washer 48 and a nut 50 may be disposed about shank 46 in a conventional manner to retain kingpin 14 within bores 24, 38. Kingpin 14 and washer 48 also together form a shoulder against which bearing cone 30 is supported. An opposed shoulder, against which bearing cone 28 is supported, is formed by a stepped diameter in body 40 of kingpin 14.

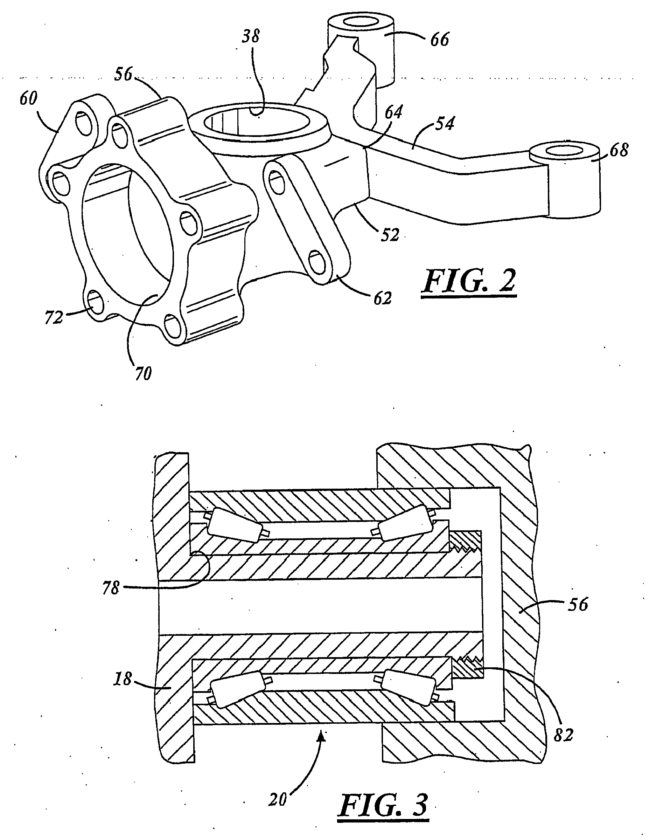

Knuckle 16 is provided 'to allow steering of the wheels mounted at either end of the steer axle. In accordance with the present invention, knuckle 16 may be cast rather than forged because the use of a live spindle reduces loads transferred through the knuckle: Knuckle 16 is mounted on kingpin 14 and is rotatable relative to axle beam 12. Referring to Figure 2, knuckle 16 may include a body 52, a steering member 54, and a flange 56.

Body 52 provides structural support for the other components of knuckle 14 and defines a second boss 58 for receipt of kingpin 14. Boss 58 is in the form of a unitary sleeve and includes bore 38 which is configured to receive kingpin 14. The angle of axle bore 24 and knuckle bore 38 are such to position kingpin 14 generally vertically, preferably at some angle inboard from a vertical position to assist steering. Body 52 may define a plurality of mounting pads 60, 62, 64 for brake components and steering member 54.

Steering member 54 is provided to couple knuckle 16 to the steering mechanism of the vehicle. Steering member is a unitary (i.e., one piece) member that defines a steering arm 66 and a tie rod arm 68 that supports a tie rod (not shown) extending generally parallel to beam 12. Member 54 may be bolted onto body 52 or otherwise conventionally fastened to body 52. Alternatively, member 54 could be made unitary with body 52.

Knuckle flange 56 is provided to support spindle hub 18 and bearing assembly 20. Flange 56 defines a central recess 70 that extends in an outboard direction and is configured to receive spindle hub 18 and bearing assembly 20. Flange 56 also defines a plurality of bores 72 for a purpose described hereinbelow.

Spindle hub 18 is provided to mount a wheel (not shown) of a vehicle. Hub 18 includes body 74 and a support flange 76 disposed at an outboard end of body 74. Body 74 is tubular and is configured to support bearing assembly 20. In the embodiment illustrated in Figure 1, bearing assembly 20 is retained between a pair of opposed shoulders 78, 80 formed in spindle hub 18. Outboard shoulder 78 is formed on an inboard side of flange 76 where flange 76 extends from body 74. Inboard shoulder 80 is formed at an inboard end of body 74 through deformation of the inboard end of body 74. Referring to Figure 3, in an alternative embodiment, bearing assembly 20 may be retained between shoulder 78 and a nut 82 disposed about a threaded portion of body 74 at the inboard end of body 74.

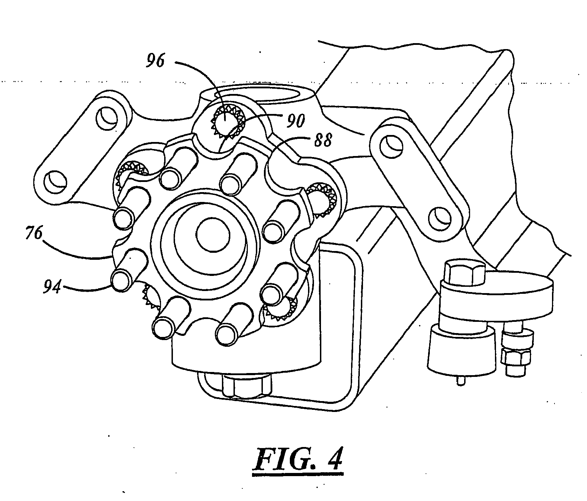

Support flange 76 is provided to support a brake rotor 84 and a wheel flange 86 to which a vehicle wheel (not shown) is mounted. Referring to Figure 4, flange 76 is scalloped in that the outer diameter of flange 76 varies to define a plurality of peaks 88 and valleys 90. Referring to Figure 1, each peak 88 defines a bore 92 through which a fastener 94, such as a bolt, pin or screw extends in an outboard direction. Referring again to Figure 4, valleys 90 may be aligned with fasteners 96 coupling bearing assembly 20 to knuckle 16 to allow access to fasteners 96. Flange 76 has a stepped outer diameter configured to support rotor 84 and wheel flange 86. Referring again to Figure 1, rotor 84 and wheel flange 86 include apertures 98, 100, respectively, configured to receive fasteners 94 to allow rotor 84 and wheel flange 86 to be mounted to spindle hub 18.

Bearing assembly 20 is provided to allow relative rotation between spindle hub 18 and knuckle 16. Bearing assembly 20 is pressed onto spindle hub 18. Bearing assembly 20 includes bearing cones 102, 104 with cones 102, 104 adjacent to one another. Cones 102, 104 form inner bearing races and provide a bearing surface for spindle hub 18. Bearing assembly 20 further includes a unitary bearing cup 106 disposed radially outwardly of both cones 102, 104 and forming a pair of outer bearing races. An inboard end of cup 106 is sized so as to be received within outboard central recess 70 of knuckle 16. Cup 106 also defines a radially extending flange 10B. Flange 108 defines a plurality of bores 110 configured to align with corresponding bores 72 in knuckle flange 56. Bores 110 and 72 are configured to receive fasteners 96 such as bolds, pins or screws used to fasten bearing assembly 20 to knuckle 16. Fasteners 96 are inserted on an outboard axial side of cup flange 108 and are received in knuckle flange 56.

A steer axle assembly 10 in accordance with the present invention represents an improvement as compared to conventional steer axle assemblies. The use of a live spindle 18 on a heavy duty vehicle with an axle 12 and kingpin 14 enables the use of a cast knuckle 16, rather than forged knuckle, that is easier and less expensive to manufacture. Further, the use of a live spindle 18 allows for removal and service of the vehicle's brake rotor 80 without removal or readjustment of the wheel bearings 20. Finally, the use of a live spindle 18 allows for an external wheel flange 82 that can be easily replaced with different flanges of varying offset, without requiring a new wheel hub assembly to accommodate the varying offsets.

While the invention has been shown and described with reference to one or more particular embodiments thereof, it will be understood by those of skill in the art that various changes and modifications can be made without departing from the spirit and scope of the invention.

## Claims

1. A steer axle assembly for a vehicle, comprising:
an axle beam extending transversely across said vehicle, said axle beam having a kingpin bore at a first end;
a kingpin disposed in said kingpin bore;
a knuckle mounted on said kingpin and rotatable relative to said axle beam;
a spindle hub configured to mount a wheel of said vehicle; and,
a bearing assembly disposed between said knuckle and said spindle hub.

2. The steer axle assembly of claim 1 wherein said knuckle comprises a flange defining a recess in which said bearing assembly and said spindle hub are received.

3. The steer axle assembly of claim 2 wherein said recess opens in an outboard direction.

4. The steer axle assembly of claim 1 wherein said bearing assembly is pressed onto said spindle hub.

5. The steer axle assembly of claim 1 wherein said spindle hub defines a pair of opposed shoulders between which said bearing assembly is retained.

6. The steer axle assembly of claim 1 wherein bearing assembly is retained between a shoulder defined in said spindle hub and a nut disposed about a threaded portion of said spindle hub.

7. The steer axle assembly of claim 1 wherein said bearing assembly includes a bearing cup forming a plurality of outer races.

8. The steer axle assembly of claim 1 wherein said bearing assembly includes a bearing cup defining a radially extending flange, said flange defining a bore configured to align with a corresponding bore in said knuckle, said bearing cup flange bore and said knuckle bore configured to receive a fastener.

9. The steer axle assembly of claim 1, further comprising a brake rotor, said brake rotor supported on said spindle hub.

10. The steer axle assembly of claim 9 wherein said spindle hub defines a radially extending flange, said brake rotor coupled to said flange by a plurality of fasteners.

11. The steer axle assembly of claim 1 wherein said knuckle is cast.

12. The steer axle assembly of claim 1 further comprising a unitary steering member coupled to said knuckle, said steering member defining a steer arm and a tie rod arm.

13. The steer axle assembly of claim 1 wherein said spindle hub defines a radially extending flange proximate an outboard end, an outer diameter of said flange varying to define a plurality of peaks and a plurality of valleys, at least some of said valleys aligned with, and thereby permitting access to, fasteners coupling said bearing assembly to said knuckle.
